# EUROPÄISCHE PATENTSCHRIFT

(11) **EP 2 791 436 B1**
(45) Veröffentlichungstag und Bekanntmachung des Hinweises auf die Patenterteilung: **31.07.2019**
(21) Anmeldenummer: 12812173.8
(22) Anmeldetag: 17.12.2012
(51) Int. Cl.: E04B 5/48, E04B 9/02, F24D 3/14, F24F 7/04, F24F 7/08, F24F 13/02, F24F 5/00

(54) **GEBÄUDE MIT EINEM IN EINE BETONDECKE DES GEBÄUDES INTEGRIERTEN RAUMKONDITIONIERUNGSSYSTEM ZUM KÜHLEN, HEIZEN UND ZUR BELÜFTUNG**
BUILDING WITH HEATING, COOLING AND VENTILATION SYSTEM WITHIN CONCRETE CEILING
IMMEUBLE AVEC SYSTÈME DE CLIMATISATION ET DE VENTILATION INTÉGRÉ DANS UNE DALLE DE BÉTON

(30) Priorität: 15.12.2011 DE 202011109313 U; 12.07.2012 DE 202012006774 U
(43) Veröffentlichungstag der Anmeldung: 22.10.2014
(73) Patentinhaber: Bam Deutschland AG, 70191 Stuttgart (DE)
(72) Erfinder: SIMON, Holger, 72766 Sankt Johann (DE)
(74) Vertreter: DREISS Patentanwälte PartG mbB
(86) Internationale Anmeldenummer: PCT/EP2012/005218
(87) Internationale Veröffentlichungsnummer: WO 2013/087225

(56) Entgegenhaltungen:
- WO-A1-2010/089027
- DE-U1-202009 001 845
- FR-A1- 2 662 785

## Beschreibung

Die vorliegende Erfindung betrifft ein Gebäude nach dem Oberbegriff des Anspruchs 1. Ein solches Gebäude ist aus der FR 2 662 785 A1 bekannt. Eine Decke mit diesen Merkmalen wird im Folgenden auch als TAK-Integral-Decke bezeichnet, wobei die Buchstaben TAK für thermo-aktive Klima-Decken stehen und das Attribut "integral" die Integration dazu verwendeter Komponenten in die Decke beschreibt.

Aus der DE 20 2009 001 845 U1 der Anmelderin ist ein Gebäude bekannt, bei dem je ein zuluftführender Abschnitt eine Ausströmöffnung in einem einzelnen Raum des Gebäudes mit der Hauptzuluftleitung verbindet. Die Hauptzuluftleitung verläuft über die Länge des Gebäudes hinweg in einem zentralen Bereich des von der Stahlbetondecke überdachten Innenraums in einem abgehängten Deckenbereich. Die Hauptabluftleitung verläuft parallel dazu ebenfalls in dem abgehängten Deckenbereich.

Von dem eingangs genannten Stand der Technik unterscheidet sich die vorliegende Erfindung durch die kennzeichnenden Merkmale des Anspruchs 1, also dadurch, dass wenigstens einer der Abschnitte über einen Schalldämpfer und einen Volumenstromregler mit dem Hauptzuluftkanal verbunden ist, wobei sowohl der Schalldämpfer als auch der Volumenstromregler ebenfalls in die Stahlbetondecke integriert sind, dass sowohl der Volumenstromregler als auch der Schalldämpfer in einem Hohlraum innerhalb der Stahlbetondecke angeordnet sind, der vom Innenraum her über eine abdeckbare Revisionsöffnung zugänglich ist, und dass der Volumenstromregler unabhängig von gegebenenfalls vorhandenen weiteren Volumenstromreglern anderer Abschnitte individuell und fernsteuerbar einstellbar ist.

Bei der Erfindung wird das Raumkonditionierungssystem gewissermaßen in eine einzige Installationsebene in einer Stahlbetondecke integriert. Beim Stand der Technik benötigt man dagegen zwei Installationsebenen, nämlich eine für die Installationen in der Decke und eine weitere Installationszone unterhalb der Stahlbetondecke, z.B. in einem zentralen Flurbereich. Diese unterhalb der Stahlbetondecke liegenden Installationszonen haben im Mittel eine Aufbauhöhe von ca 50 cm und lassen somit keine über die volle Nutzungstiefe des Innenraums glatt durchgehende Deckenuntersicht zu. Dies kann bestimmte Nutzungen einschränken, weil es die Variabilität der Raumaufteilung einschränkt. Der abgehängte Deckenbereich wird darüber hinaus von vielen Nutzern als im Raum hängender und nicht attraktiv wirkender Kasten angesehen.

Die Erfindung vermeidet diese Nachteile durch die Integration der bislang in dem abgehängten Deckenbereich untergebrachten Elemente des Raumkonditionierungssystems in die Stahlbetondecke. Als weiterer Vorteil ergibt sich eine erhöhte Variabilität möglicher Nutzungsflächen in dem Innenraum. Dies ist insbesondere bei Bürogebäuden von Vorteil, weil man bei der Anordnung von Trennwänden/Flurwänden im Grundriss völlig frei ist. Vorteilhaft ist auch, dass sich z.B. beim Einsatz von Systemtrennwänden kaum Umbauzeiten bei Nutzungsänderungen in den Grundrissen/Gebäuden ergeben. Dies liegt daran, dass früher für Änderungen der Technik erforderliche Umbauzeiten weitgehend entfallen, da solche Änderungen bei der erfindungsgemäß voll in der Stahlbetondecke integrierten Raumkonditionierung steuerungstechnisch erfolgen können.

Der Gegenstand des Anspruchs 1 ermöglicht eine variable Aufteilung des Luftstroms zwischen dem Hauptzuluftkanal und den Teilbereichen des Innenraums zugeordneten Teilabschnitten des Zuluftkanals. Dadurch ist eine individuelle Anpassung der Luftströme in die jeweiligen Teilbereiche eines Geschosses möglich. Darüber hinaus ermöglicht die Erfindung eine geräuscharme Aufteilung der Zuluft zwischen einem Hauptzuluftkanal und mehreren Teilbereichen.

Eine bevorzugte Ausgestaltung zeichnet sich dadurch aus, dass die Stahlbetondecke eine den Innenraum ohne innere Stützen überspannende Spannbetondecke ist.

Bevorzugt ist auch, dass die zuluftführenden Abschnitte in die Stahlbetondecke einbetoniert sind.

Ferner ist bevorzugt, dass der Hauptabluftkanal zwischen der Stahlbetondecke und der Außenfassade der Gebäude angeordnet ist.

Bevorzugt ist auch, dass der zuluftführende Teil und der abluftführende Teil über eine Wärmetauschereinrichtung miteinander gekoppelt sind, so dass die von außen zugeführte Frischluft durch die nach außen abgeführte Abluft vortemperiert wird.

Bevorzugt ist auch, dass die Stahlbetondecke eine den Innenraum überdeckende Stahlbetondecke ist.

Eine weitere bevorzugte Ausgestaltung zeichnet sich durch eine oder mehrere Mittelstützen aus, die Gewicht der Stahlbetondecke aufnehmen.

Bevorzugt ist auch, dass die Stahlbetondecke eine zwei Geschosse eines Gebäudes trennende Zwischendecke ist.

Ferner ist bevorzugt, dass die Stahlbetondecke ein Bestandteil einer Dachkonstruktion eines Gebäudes ist.

Bevorzugt ist auch, dass die Decke eine ebene Decke ist.

Ferner ist bevorzugt, dass die Decke als Teil eines gewölbten, Stützen aufweisenden Schalendachs oder freitragenden Kuppeldachs in gewölbter Form verwirklicht ist.

Eine weitere bevorzugte Ausgestaltung zeichnet sich durch wenigstens ein Multifunktionsmodul mit einem Schalldämpfer, einem Zuluft-Volumenstromregler, einem Deckendrallauslass, einer Vorlaufleitung mit einem elektrischen steuerbaren Ventil und einer Rücklaufleitung mit einem elektrisch steuerbaren Ventil aus.

Weitere Vorteile ergeben sich aus Unteransprüchen, der Beschreibung und den beigefügten Figuren.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Ausschnitt aus einem Gebäude in einem Vertikalschnitt für eine erste Ausgestaltung der Erfindung;
- Fig.2: einen sogenannten Deckenspiegel, der Elemente der Ausgestaltung nach Fig. 1 in ihrer horizontalen Lage in der Stahlbetondecke zeigt,
- Fig. 3: einen Ausschnitt aus einem Gebäude in einem Vertikalschnitt für eine zweite Ausgestaltung der Erfindung;
- Fig.4: einen sogenannten Deckenspiegel, der Elemente der Ausgestaltung nach Fig. 3 in ihrer horizontalen Lage in der Stahlbetondecke zeigt;
- Fig. 5: eine Ausgestaltung eines bei der ersten Ausgestaltung und bei der zweiten Ausgestaltung vorteilhaft verwendbaren Multifunktionsmoduls, und
- Fig. 6: einen Querschnitt durch eine Stahlbetondecke mit einem vollständig in die Deckentiefe integrierten Multifunktionsmodul

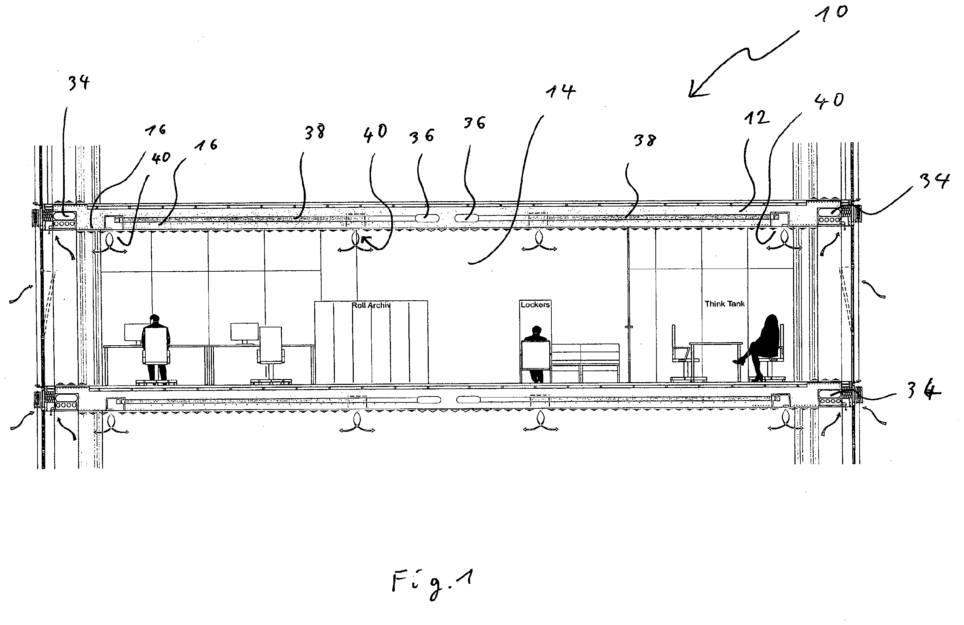

Figur 1 zeigt im Einzelnen einen Ausschnitt aus einem Gebäude 10 in einem Vertikalschnitt. Das Gebäude, hier ein mehrere Geschosse aufweisendes Gebäude, weist für das dargestellte Geschoss eine Spannbetondecke 12 auf, die einen Innenraum 14 des Gebäudes überspannt. Zur Beheizung und zur Kühlung des von der Stahlbetondecke überdeckten Innenraums weist die Stahlbetondecke 12 ein in die Stahlbetondecke integriertes und auf Wasser als Wärmeleitungsflüssigkeit basierendes Kühl/Heizsystem auf.

Das Kühl/Heizsystem ist bevorzugt ein Kreislaufsystem und an einen Vorlauf und einen Rücklauf einer zentralen Kühl/Heizeinrichtung des Gebäudes angeschlossen. Diese Einrichtung bildet gewissermaßen das oben genannte Reservoir. Das wasserbasierte Kühl-/Heizsystem umfasst eine wasserführende Verrohrung 16 mit in die jeweilige Stahlbetondecke 12 integrierten, d. h. einbetonierten Kühl-/Heizrohren. Die Verrohrung ist in Form von Punkten dargestellt. Der Schnitt durch die Stahlbetondecke verläuft also senkrecht zur Strömungsrichtung. Die wasserführende Verrohrung 16 umfasst einen Vorlauf und einen Rücklauf. Die Kühl-/Heizrohre sind im beispielhaft dargestellten Fall mit einem Abstand von ca. 60 bis 80 mm zu der dem Innenraum 14 zugewandten Oberfläche im Beton der Stahlbetondecke 12 angeordnet. Sie haben bevorzugt einen Abstand von 20 bis 30 cm voneinander. Das wasserbasierte Kühl-/Heizsystem wird mit entsprechend temperiertem Wasser mit verhältnismäßig geringer Strömungsgeschwindigkeit von vorzugsweise 0,1 bis 0,7 m/s im Bereich der einbetonierten Kühl-/Heizrohre durchströmt. Auf diese Weise kann die Temperierung des Gebäudes 10 vorzugsweise ausschließlich durch das wasserbasierte Kühl-/Heizsystem bei allen Jahreszeiten realisiert werden.

Darüber hinaus weist die Stahlbetondecke ein zur Frischluftzufuhr in den Innenraum 14 und zur Abluftabfuhr aus dem Innenraum 14 dienendes luftführendes Rohrsystem mit einem zuluftführenden Teil und einem abluftführenden Teil auf.

Das Rohrsystem besitzt wenigstens einen Hauptzuluftkanal 36 und von dem Hauptzuluftkanal abzweigende und zu einzelnen Teilbereichen des Innenraums führende Abschnitte 38, wobei wenigstens ein einem jeweiligen Teilbereich des Innenraums 14 zugeordneter Abschnitt des zuluftführenden Teils des Rohrsystems in die Stahlbetondecke des Innenraums integriert ist und über eine Einströmöffnung 40 in den Innenraum 14 mündet, so dass sich die Temperatur der ggf. noch vortemperierten Frischluft beim Durchströmen des Abschnitts der Temperatur der wassertemperierten Stahlbetondecke 12 angleicht.

Das Gebäude zeichnet sich dadurch aus, dass über die einem jeweiligen Teilbereich des Innenraums 14 zugeordneten Abschnitte 38 des zuluftführenden Teils des Rohrsystems hinaus auch der Hauptzuluftkanal 36 in die Spannbetondecke integriert ist. Bei dem dargestellten Ausführungsbeispiel ist auch ein den Innenraum 14 entlüftender Hauptabluftkanal 34 in die Stahlbetondecke 12 integriert. Dies ist aber nicht zwingend erforderlich und stellt daher kein wesentliches Element der Erfindung dar.

Eine bevorzugte Ausgestaltung zeichnet sich dadurch aus, dass die zuluftführenden Abschnitte 38 in die Stahlbetondecke 12 einbetoniert sind.

Das Rohrsystem dient zur kontrollierten Belüftung und Entlüftung des Innenraums 14. Das luftführende Rohrsystem umfasst eine Vielzahl von einem jeweiligen Teilbereich des Innenraums 14 zugeordneten und bevorzugt wenigstens 4 m langen Abschnitten 38 des zuluftführenden Teils des Rohrsystems, die in die Stahlbetondecke des jeweiligen Innenraums 14 einbetoniert sind und die über eine jeweilige Einströmöffnung 40 in den betreffenden Teilbereich des Innenraums 14 münden. Ein Deckenbereich, in dem eine Ausströmöffung angeordnet ist und dessen Wärmeaustausch mit dem allgemeinen Vorlauf und Rücklauf separat regelbar ist, wird auch als Deckensystemfeld bezeichnet. Bei der dem Gebäude und dessen Innenräumen zuzuführenden Frischluft handelt es sich bevorzugt um 100% frische Aussenluft, also nicht um Mischluft. Diese zuzuführende Frischluft wird aus der Umgebung des Gebäudes angesaugt und bevorzugt einer zum Beispiel an zentraler Stelle des Gebäudes vorgesehenen Wärmetauschereinrichtung zugeführt, wo eine thermische Kopplung mit der im abluftführenden Teil 34 des luftführenden Rohrsystems strömenden Abluft ausgeführt und damit eine Vortemperierung der den Innenräumen zuzuführenden Frischluft durchgeführt wird. Bei der Wärmetauschereinrichtung kann es sich beispielsweise um einen Plattenwärmetauscher handeln.

Die von außen zugeführte und in der Wärmetauschereinrichtung vortemperierte Frischluft wird über den zuluftführenden Teil des luftführenden Rohrsystems in typischerweise vertikalen Steigsträngen den einzelnen Geschossen zugeführt, wo geschossweise bevorzugt wenigstens ein horizontaler, in die Stahlbetondecke integrierter Zuluftkanal 36 vorgesehen ist. Von diesem horizontalen Zuluftkanal 36 ausgehend führen die schon erwähnten Abschnitte 38 weg, die in die Stahlbetondecke einbetoniert sind und über eine jeweilige Einströmöffnung 40 in den betreffenden Teilbereich des Innenraums münden.

Ferner ist in dem jeweiligen Teilbereich des Innenraums eine Ausströmöffnung für die Abluft vorgesehen, die über einen verhältnismäßig kurzen Abschnitt in einen horizontalen Abluftkanal 34 führt.

Es hat sich gezeigt, dass auch bei Verwendung einfachster glatter handelsüblicher Kunststoffrohre zur Ausbildung der einbetonierten Abschnitte 38 bei einer Abschnittslänge von nur wenigstens 4 m eine Temperierung der den Innenräumen zuzuführenden Frischluft auf im Wesentlichen die Temperatur der wassergekühlten bzw. wassererwärmten Stahlbetondecke realisierbar ist, so dass die in die Innenräume einströmende Frischluft nicht als unangenehm kalt oder warm empfunden wird.

Die durch die einbetonierten Abschnitte 38 geführte und in den jeweiligen Teilbereich des Innenraums eingeleitete Frischluft wird dabei auf die Temperatur der wassertemperierten Stahlbetondecke erwärmt oder gekühlt; ihre Temperatur liegt dann typischerweise zwischen der Temperatur des in der Decke geführten Wassers und der Deckenabstrahlungstemperatur, je nachdem wo und wie die luftführenden Abschnitte des zuluftführenden Teils des Rohrsystems in Bezug auf die wasserführenden Kühl-/Heizrohre des wasserbasierten Kühl-/Heizsystems innerhalb der Stahlbetondecke geführt sind. Die aus den Innenräumen abgeführte Abluft weist die Raumtemperatur auf und wird über den abluftführenden Teil zu der Wärmetauschereinrichtung geführt und danach an die Umgebung des Gebäudes ausgeblasen.

Bei der Stahlbetondecke handelt es sich in einer bevorzugten Ausgestaltung um eine den Innenraum ohne innere Stützen überspannende Spannbetondecke. Bei einer solchen Konstruktion prägt gerade die ungehinderte Deckenuntersicht das Raumgefühl. Im Unterschied zum eingangs genannten Stand der Technik erlaubt die Integration des Hauptzuluftkanals in die Decke eine über die ganze Spannbreite der Spannbetondecke durchgehende Deckenuntersicht, was insbesondere in von nicht deckenhohen Raumteilern unterteilten oder auch ohne Raumteiler ausgestatteten Großraumbüros von Vorteil ist.

Bevorzugt ist auch, dass wenigstens einer der Abschnitte 38 über einen Schalldämpfer und einen Volumenstromregler mit dem Hauptzuluftkanal 36 verbunden ist, wobei sowohl der Schalldämpfer als auch der Volumenstromregler ebenfalls als Elemente eines weiter unten noch zu erläuternden Multifunktionsmoduls in die Stahlbetondecke integriert sind. In einer besonders bevorzugten Ausgestaltung sind sämtliche Abschnitte über je ein erfindungsgemäßes Multifunktionsmodul mit einem abschnittsindividuellen Schalldämpfer und einem abschnittsindividuellen Volumenstromregler mit dem Hauptzuluftkanal verbunden.

Bevorzugt ist auch, dass der Volumenstromregler unabhängig von gegebenenfalls vorhandenen weiteren Volumenstromreglern anderer Abschnitte individuell und fernsteuerbar einstellbar ist.

Eine weitere bevorzugte Ausgestaltung zeichnet sich dadurch aus, dass der Hauptabluftkanal zwischen der Stahlbetondecke und der Außenfassade des Gebäudes angeordnet ist, was aber nicht erfindungswesentlich ist.

Eine solche Anordnung des Hauptabluftkanals direkt im Fassadenbereich ermöglicht auch die Abführung des von außen erfolgenden Wärmeeintrags durch die Fassade, der sich schon aus thermischen Gründen an dem oben äußeren Schnittpunkt zwischen Fassade und Decke konzentriert.

Zur weiter verbesserten Temperaturregulierung in Fassaden-nahen Teilbereichen des Innenraums sieht eine weitere bevorzugte Ausgestaltung Randzonenelemente in Form von oberflächennahen Flächenheizungen vor.

Bevorzugt ist auch, dass der zuluftführende Teil und der abluftführende Teil über eine Wärmetauschereinrichtung miteinander gekoppelt sind, so dass die von außen zugeführte Frischluft durch die nach außen abgeführte Abluft vortemperiert wird.

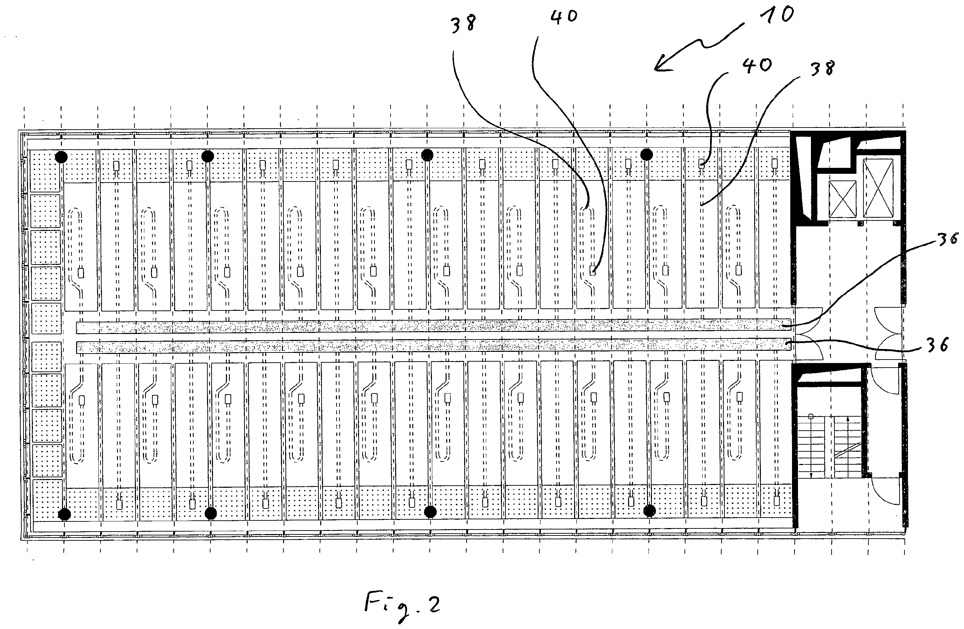

Fig. 2 zeigt einen sogenannten Deckenspiegel, der Elemente der Erfindung in ihrer horizontalen Lage in der Stahlbetondecke zeigt. Im Einzelnen zeigt die Figur 2 zwei zentral und parallel verlaufende Hauptzuluftkanäle 36, von denen jeder eine Hälfte des von der Decke überspannten Innenraums mit Frischluft versorgt. Von jedem Hauptzuluftkanal zweigt eine Vielzahl von Abschnitten 38 ab, über die Frischluft zu Ausströmöffnungen 40 und über diese in jeweils zugeordnete Teilbereiche des Innenraums fließt. Über im Einzelnen nicht dargestellte Verbindungen des Innenraums zu einem oder mehreren an der Peripherie verlaufenden Hauptabluftkanälen wird der Innenraum 10 entlüftet. Wenigstens eine Ausströmöffnung 40 ist jeweils ein Bestandteil eines erfindungsgemäßen Multifunktionsmoduls. Ein Multifunktionsmodul kann aber auch mehrere Ausströmöffnungen aufweisen.

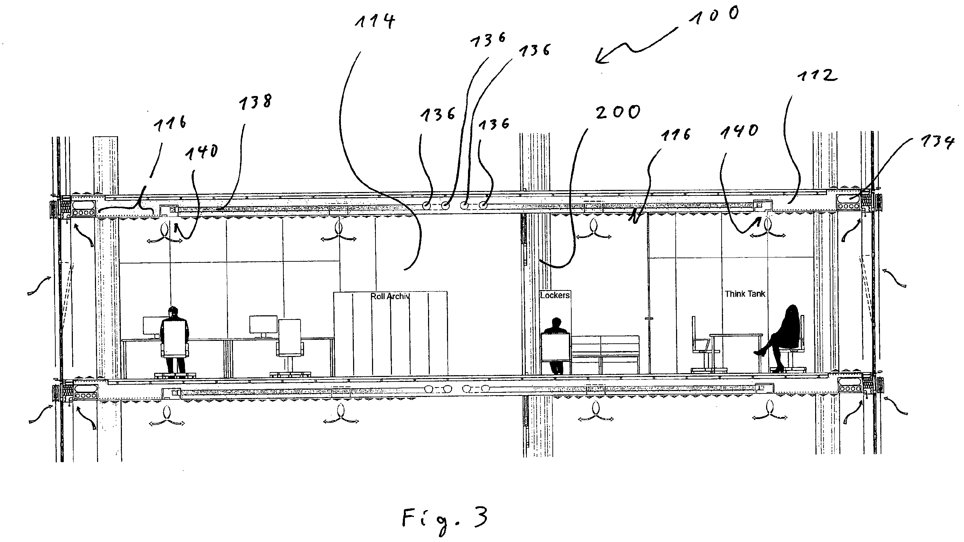

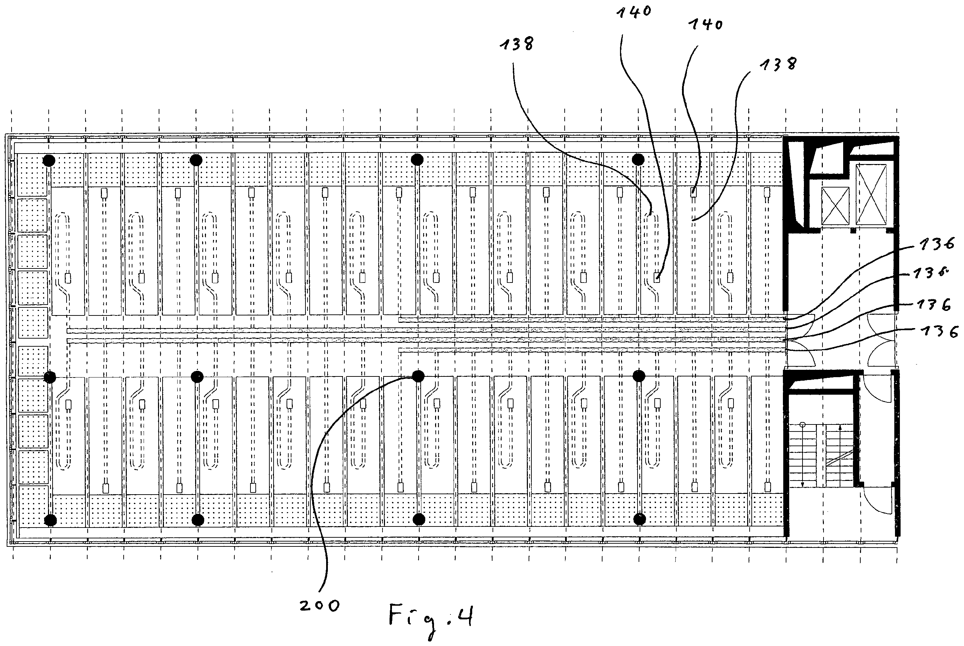

Die Figuren 3 und 4 zeigen weitere Ausgestaltungen von Stahlbetondecken. Figur 3 zeigt im Einzelnen einen Ausschnitt aus einem Gebäude 100 in einem Vertikalschnitt. Das Gebäude, hier ein mehrere Geschosse aufweisendes Gebäude, weist für das dargestellte Geschoss eine Stahlbetondecke 112 auf, die einen Innenraum 114 des Gebäudes überdeckt. Zur Beheizung und zur Kühlung des von der Stahlbetondecke überdeckten Innenraums weist die Stahlbetondecke 112 ein in die Stahlbetondecke integriertes und auf Wasser als Wärmeleitungsflüssigkeit basierendes Kühl/Heizsystem auf.

Das Kühl/Heizsystem ist bevorzugt ein Kreislaufsystem und an einen Vorlauf und einen Rücklauf einer zentralen Kühl/Heizeinrichtung des Gebäudes angeschlossen. Das wasserbasierte Kühl-/Heizsystem umfasst eine wasserführende Verrohrung 116 mit in die jeweilige Stahlbetondecke 112 integrierten, d.h. insbesondere einbetonierten Kühl-/Heizrohren. Die Verrohrung ist in Form von Punkten dargestellt. Der Schnitt durch die Stahlbetondecke, der in der Fig. 3 zu sehen ist, verläuft also senkrecht zur Strömungsrichtung in der Wasserverrohrung. Die wasserführende Verrohrung 116 umfasst einen Vorlaufanschluss und einen Rücklaufanschluss. Die Kühl-/Heizrohre sind im beispielhaft dargestellten Fall mit einem Abstand von ca. 60 bis 80 mm zu der dem Innenraum 114 zugewandten Oberfläche im Beton der Stahlbetondecke 112 angeordnet. Sie haben einen beispielhaften Abstand von 20 bis 30 cm voneinander. Das wasserbasierte Kühl-/Heizsystem wird mit entsprechend temperiertem Wasser mit verhältnismäßig geringer Strömungsgeschwindigkeit von vorzugsweise 0,1 bis 0,7 m/s im Bereich der einbetonierten Kühl-/Heizrohre durchströmt. Auf diese Weise kann die Temperierung des Gebäudes 100 vorzugsweise ausschließlich durch das wasserbasierte Kühl-/Heizsystem im Niedrigtemperaturbetrieb bei allen Jahreszeiten realisiert werden.

Darüber hinaus weist die Stahlbetondecke ein zur Frischluftzufuhr in den Innenraum 114 und zur Abluftabfuhr aus dem Innenraum 114 dienendes luftführendes Rohrsystem mit einem zuluftführenden Teil und einem abluftführenden Teil auf.

Das Rohrsystem besitzt wenigsten einen aber bei Bedarf auch mehrere Hauptzuluftkanäle 136 und von den Hauptzuluftkanälen 136 abzweigende und zu einzelnen Teilbereichen des Innenraums 114 führende Abschnitte 138, wobei wenigstens ein einem jeweiligen Teilbereich des Innenraums 114 zugeordneter Abschnitt des zuluftführenden Teils des Rohrsystems in die Stahlbetondecke des Innenraums integriert ist und über eine Einströmöffnung 140 in den Innenraum 14 mündet, so dass sich die Temperatur der vortemperierten Frischluft beim Durchströmen des Abschnitts der Temperatur der wassertemperierten Stahlbetondecke 112 angleicht.

Das Gebäude zeichnet sich dadurch aus, dass die Hauptzuluftkanäle 136 in die Stahlbetondecke 112 integriert sind. Bevorzugt ist auch, dass auch die einem jeweiligen Teilbereich des Innenraums 114 zugeordneten Abschnitte des zuluftführenden Teils des Rohrsystems in die Stahlbetondecke 112 integriert sind. Bei dem dargestellten Ausführungsbeispiel ist auch ein den Innenraum entlüftender Hauptabluftkanal 134 in die Stahlbetondecke integriert. Dies ist aber auch hier nicht zwingend erforderlich und stellt daher kein wesentliches Element der Erfindung dar.

Eine bevorzugte Ausgestaltung zeichnet sich dadurch aus, dass die zuluftführenden Abschnitte 138 in die Stahlbetondecke 112 einbetoniert sind.

Das Rohrsystem dient zur kontrollierten Belüftung und Entlüftung des Innenraums 114. Das zuluftführende Rohrsystem umfasst eine Vielzahl von einem jeweiligen Teilbereich des Innenraums 14 zugeordneten und bevorzugt wenigstens 4 m langen Abschnitten 138 des zuluftführenden Teils des Rohrsystems, die in die Stahlbetondecke des jeweiligen Innenraums 114 einbetoniert sind und über eine jeweilige Einströmöffnung 140 in den betreffenden Teilbereich des Innenraums 114 münden. Die Einströmöffnung ist bevorzugt ein Teil eines erfindungsgemäßen Multifunktionsmoduls, dessen Einzelheiten weiter unten noch erläutert werden.

Bei der dem Gebäude und dessen Innenräumen zuzuführenden Frischluft handelt es sich bevorzugt um 100% frische Aussenluft, also nicht um Mischluft. Diese zuzuführende Frischluft wird aus der Umgebung des Gebäudes angesaugt und einer zum Beispiel an zentraler Stelle des Gebäudes vorgesehenen Wärmetauschereinrichtung zugeführt, wo eine thermische Kopplung mit der im abluftführenden Teil 134 des luftführenden Rohrsystems strömenden Abluft ausgeführt und damit eine Vortemperierung der den Innenräumen zuzuführenden Frischluft durchgeführt wird. Bei der Wärmetauschereinrichtung kann es sich beispielsweise um einen Plattenwärmetauscher handeln.

Die von außen zugeführte und in der Wärmetauschereinrichtung vortemperierte Frischluft wird über den zuluftführenden Teil des luftführenden Rohrsystems in typischerweise vertikalen Steigsträngen den einzelnen Geschossen zugeführt, wo bevorzugt pro Geschoss mehrere horizontale, in die Stahlbetondecke integrierte Zuluftkanäle 136 vorgesehen sind. Von diesen horizontalen Zuluftkanälen 136 ausgehend führen die schon erwähnten Abschnitte 138 weg, die in die Stahlbetondecke einbetoniert sind und über eine jeweilige Einströmöffnung 140 in den betreffenden Teilbereich des Innenraums münden.

Ferner ist in dem jeweiligen Teilbereich des Innenraums eine Ausströmöffnung 140 für die Abluft vorgesehen, die über einen verhältnismäßig kurzen Abschnitt in einen horizontalen Abluftkanal 134 führt.

Es hat sich gezeigt, dass auch bei Verwendung einfachster glatter handelsüblicher Kunststoffrohre zur Ausbildung der einbetonierten Abschnitte 138 bei einer Abschnittslänge von nur wenigstens 4 m eine Temperierung der den Innenräumen zuzuführenden Frischluft auf im Wesentlichen die Temperatur der wassergekühlten bzw. wassererwärmten Stahlbetondecke realisierbar ist, so dass die in die Innenräume einströmende Frischluft nicht als unangenehm kalt oder warm empfunden wird.

Die durch die einbetonierten Abschnitte 138 geführte und in den jeweiligen Teilbereich des Innenraums eingeleitete Frischluft wird dabei auf die Temperatur der wassertemperierten Stahlbetondecke erwärmt oder gekühlt; ihre Temperatur liegt dann typischerweise zwischen der Temperatur des in der Decke geführten Wassers und der Deckenabstrahlungstemperatur, je nachdem wo und wie die luftführenden Abschnitte des zuluftführenden Teils des Rohrsystems in Bezug auf die wasserführenden Kühl-/Heizrohre des wasserbasierten Kühl-/Heizsystems innerhalb der Stahlbetondecke geführt sind. Über Verbindungen 141 des Innenraums zu einem oder mehreren an der Peripherie verlaufenden Hauptabluftkanälen 140 wird der Innenraum entlüftet. Die aus den Innenräumen abgeführte Abluft weist die Raumtemperatur auf und wird über den abluftführenden Teil zu der Wärmetauschereinrichtung geführt und danach an die Umgebung des Gebäudes ausgeblasen.

Im Unterschied zum Gegenstand der Fig. 1 handelt es sich beim Gegenstand der Fig. 3 nicht um eine den Innenraum ohne innere Stützen überspannende Spannbetondecke, sondern um eine Stahlbetonflachdecke mit einer oder mehreren Mittelstützenreihen, also um eine sogenannte Einfeld-, Zweifeld- oder Mehrfelddecke, wobei die Felder durch Mittelstützen 200 unterteilt sind. Bei den Mittelstützen handelt es sich bevorzugt um solche aus Stahlbeton oder Stahl, die Gewicht der Decke aufnehmen. Bei einer Einfeld-Decke kann auf die Mittelstütze verzichtet werden.

Fig. 4 zeigt einen sogenannten Deckenspiegel, der Elemente dieser Ausgestaltung der Erfindung in ihrer horizontalen Lage in der Stahlbetondecke zeigt. Im Einzelnen zeigt die Figur 4 vier zentral und parallel verlaufende Hauptzuluftkanäle 136, von denen jeder bei der dargestellten Ausgestaltung ein Viertel des von der Decke überspannten Innenraums mit Frischluft versorgt. Die Erfindung ist aber nicht auf n = 4 Zuluftkanäle beschränkt. Von jedem Hauptluftkanal zweigt eine Vielzahl von Abschnitten 138 ab, über die Frischluft zu Ausströmöffnungen 140 und über diese in jeweils zugeordnete Teilbereiche des Innenraums fließt. Über Verbindungen des Innenraums zu einem oder mehreren an der Peripherie verlaufenden Hauptabluftkanälen wird der Innenraum entlüftet.

Bei dem Gegenstand der Figuren 3 und 4 handelt es sich zwar grundsätzlich auch wieder um eine vollumfänglich in eine Stahlbetondecke integrierte Lösung für eine Thermo-Aktive Klima Decke (TAK), aus technisch konstruktiven Gründen ist jedoch das System der Haupt-Zuluftrohr-Führungen für Mehrfelddecken, also zum Beispiel beim Gegenstand der Figuren 3 und 4, grundsätzlich anders ausgeführt als für Spannbetondecken, von denen ein Beispiel den Gegenstand der Figuren 1 und 2 bildet.

Der Unterschied lässt sich leicht durch einen Vergleich des Deckenspiegels gemäß Fig. 2 mit dem Deckenspiegel gemäß Fig. 4 sowie durch einen Vergleich der jeweils dazugehörigen Deckenquerschnitte gemäß Fig. 1 und Fig. 3 feststellen, indem man die in den beiden Fällen, also einmal im Fall einer Spannbetondecke und ein anderes Mal im Fall einer Stahlbetonflachdecke mit einer Mittelstützenreihe, jeweils unterschiedlich verwirklichten Haupt-Zuluftleitungen vergleicht. Die unterschiedliche Anzahl, Lage und Anordnung der Hauptzuluftrohre in den Stahlbetondecken ergibt sich aus den unterschiedlichen statischen und konstruktiven Anforderungen und dem unterschiedlichen Tragverhalten der beiden verschiedenen Deckensysteme.

Die bei beiden Deckentypen in Bezug auf die Tragwerksplanung zu berücksichtigenden technischen, statischen und konstruktiven Belange ergeben sich daraus, dass insbesondere Einflüsse der folgenden Komponenten zu berücksichtigen sind:
Haupt-Zuluftrohre von den vertikalen Versorgungsschächten zu den Zuluft-Verteilungsrohren mit Anbindung an die Deckendralldurchlässe,
Deckendralldurchlässe für die zugluftfreie Zuluftzuführung in die konditionierten Räume,
Wasserverrohrung, einschl. der erforderlichen . Regel-Ventile für die einzeln zu steuernden Deckenelemente, welche Wasserverrohrung bevorzugt ca. 6 cm über der Unterkante der Betondecke liegt,
Wasserverrohrung, einschl. der erforderlichen Regel-Ventile für die oberflächennahen Flächenheizungen im Fassadenbereich, also für die sogenannten Randzonenelemente,
Volumenstrom-Regler in den Zuluftleitungen,
Schalldämpfer in den Zuluftleitungen,
elektrische Zuleitungen für die Steuerung der Regel-Ventile, und für die Steuerung der Zuluft-Volumenstromregler,
gegebenenfalls noch elektrische Installationen bei einer Festinstallation der Deckenbeleuchtung,
Rohrinstallationen für die Sprinklerleitungen,
Brandmelder,......

Aus dieser Menge an Einzelkomponenten und der Dichte der erforderlichen Installationen in jedem Deckensystemfeld von ca.1.20 - 1.50 m Breite, das jeweils für sich selbst insgesamt mit allen vorbeschriebenen Komponenten einzeln regelbar und steuerbar sein soll, ergeben sich vielfältige Anforderungen insbesondere an die Tragwerksplanung in Verbindung mit dem erforderlichen Brandschutz und dem Körperschallschutz.

Hinzu kommt, dass die Haupt-Zuluftleitungen, die in der Regel 2-4 Zuluftrohre mit größeren Querschnitten aufweisen, und die davon zu den einzelnen Ausströmöffnungen (Deckendralldurchlässe) der Deckensystemfelder abgehenden Zuluftverteilungsleitungen (in der Regel je Fassadenachse eine Zuluftleitung mit ca. 60-90 mm Durchmesser sowie ein Deckendralldurchlass) in der konstruktiven Deckenebene sowohl längs der Haupt-Zuluftleitungen als auch längs der quer dazu liegenden Zuluftverteilungsleitungen innerhalb der statisch tragenden Deckenkonstruktionen in die Betondecken integriert werden müssen.

Die Integration all dieser Komponenten stellt an die Tragwerksplanung höchste Ansprüche, die aufgrund der Komplexität sich nur im Rahmen einer integralen Planung bewältigen lassen. Der Tragwerkplaner muss dabei die Anzahl und Größe unterschiedlichster Schwächungen im Bereich der Tragkonstruktionen berücksichtigen. Der für die Gebäudetechnik zuständige Fachingenieur für Gebäudetechnik muss ebenfalls mit einem hohen Maß an Innovation und vielen Berechnungen/Nachweisen/Isothermenberechnungen, Simulationen etc. die bei der erfindungsgemäßen, in die Decke integrierten Hauptzuluftleitung jeweils gegenüber abgehängten und frei zugänglichen Leitungen erheblich geänderten Randparameter untersuchen und daraus neue Planungsvorgaben an die Gebäudetechnik definieren. So müssen z.B. auch die Temperaturentwicklungen der Zuluftzuführung in den von massiven Konstruktion umschlossenen Haupt-Zuluftleitungen definiert werden. Schließlich darf es beispielweise im Winter durch die langen in der Stahlbetondecke integrierten Hauptzuluftleitungen nicht zu einer unzulässigen Temperaturerhöhung der in die Räume eingeblasenen Zuluft kommen, weil damit die Behaglichkeitskriterien nach ISO 7730 nicht mehr gegeben wären, etc.

Weiter ist es aus Installationsgründen sowie aus Gründen der Revisionfähigkeit-und -möglichkeit der verschiedenen TAK-Komponenten sowie der Regelungsmöglichkeit der Ventilsteuerungen für die Wasserverrohrung und der Volumenstromregler wichtig, eine Reihe von Komponenten in einem speziell entwickeltem Deckenzuluft-Multifunktions-Modul gemeinsam zu installieren, weil anderenfalls zu viele Montage- und Revisionsöffnungen in der Deckenuntersicht installiert werden müssten, was zu erheblichen Problemen bei dem Tragverhalten der Stahlbeton- bzw. Spannbeton-Konstruktionen führen kann.

Hinzu käme, dass die Vielzahl von kleineren immer von der Deckenunterseite von unten sichtbaren Deckeneinbauten/Revisionsöffnungen, die dazu noch dazu sehr unterschiedliche Größen und Formenaufweisen könnten, auch unter ästhetischen Gesichtspunkten im Hinblick auf das Erscheinungsbild der Decke von unten nicht sinnvoll und darüber hinaus auch in der handwerklichen Ausführung vor Ort (rohbauseitig und ausbauseitig) optisch problematisch wäre.

Im Übrigen weist stellt die statische Tragwerksystem für die Mehrfelddecke und das statische Tragwerksystem für die Spannbetondecke mit einer jeweils glatten, durchgängig ebenen Deckenuntersicht sehr unterschiedliche Anforderungen an die Anzahl, die Anordnung, die Dimensionierung und die Lage der in die Betondecken integrierten Hauptzuluftleitungen und der Deckenzuluft-Multifunktionsmodule. Ähnliches gilt auch für die aus Gründen des konstruktiven Brandschutzes bei beiden Systemen unterschiedlich starken Betonüberdeckungen der jeweiligen Einbauteile.

Bei den TAK-Integral-Systemen in einer Stahlbeton-Mehrfeld-Flachdecke können beispielsweise die in den Decken zu integrierenden Hauptzuluftleitungen nur in einer ganz bestimmten Dimensionierung und Anzahl mit einem konkreten Mindestabstand zur Stützenachse in der Erstreckungsrichtung der der Hauptzuluftleitungen geführt werden. Die Hauptzuluftleitungen sind hier aus Gründen des statisch konstruktiven Tragverhaltens bevorzugt als zylindrische Metallrohre verwirklicht.

Da diese Leitungen eine konstruktive Brandschutzüberdeckung benötigen, ergibt sich in Abhängigkeit von der in einer sog. Nutzungseinheit erforderlichen Gesamtluftmenge, der dafür erforderlichen Anzahl und Dimensionierung der Hauptzuluftleitungen, sowie der maximalen Stützweiten der Baukonstruktion eine konstruktive Gesamt-Beton-Deckenstärke von ca. 32 cm. Bei einer TAK-Decke mit abgehängter Hauptzuluftleitung liegt die Deckenstärke dagegen eher bei 26-30 cm.

Bei der Spannbetondecke sieht eine solche Lösung der Anordnung, der Lage und der Dimensionierung der Hauptzuluftleitungen unter Berücksichtigung der konstruktiven Belange an eine solche Konstruktion völlig anders aus: Bei einer Regel-Spannweite von insgesamt ca. 13-15 m, was eine übliche Gesamt-Gebäudetiefe für Standard-Bürogebäude ist, ergibt sich, dass die in die Spannbetondecke zu integrierende Haupt-Zuluftleitungen bevorzugt unmittelbar beidseitig mittig neben der Deckenlängsachse (X-Achse) liegen sollte. Dabei ergibt sich auch ein Mindest/Maximalabstand der beiden Hauptzuluftleitungen zueinander, der zwingend eingehalten werden muss.

Die Abstandserfordernisse ergeben sich daraus, dass der Einbau dieser großen Lüftungskanäle zu einer lokalen Schwächung des tragenden Deckenquerschnittes führt. Vor allem bei vorgespannten Flachdecken kann es durch die Überlagerung von maximalen Biegespannungen und Druckspannungen aus Vorspannungen in diesen geschwächten Querschnittsbereichen zu einem Druckversagen kommen. Eine Anordnung der Kanäle in für ein Druckversagen anfälligen Bereichen ist also zu vermeiden.

Sowohl für das Ausführungsbeispiel mit der Spannbetondecke als auch für das Ausführungsbeispiel mit der Einfeld-oder Mehrfeld-Stahlbetondecke gilt, dass Randzonenelemente in Form von oberflächennahen Flächenheizungen vorgesehen sein können, um die Temperaturregulierung in Fassaden-nahen Teilbereichen des Innenraums bis hin zu einer Einzelraumregelung weiter zu verbessern.

Bevorzugt ist auch, dass der zuluftführende Teil und der abluftführende Teil über eine Wärmetauschereinrichtung miteinander gekoppelt sind, so dass die von außen zugeführte Frischluft durch die nach außen abgeführte Abluft vortemperiert wird.

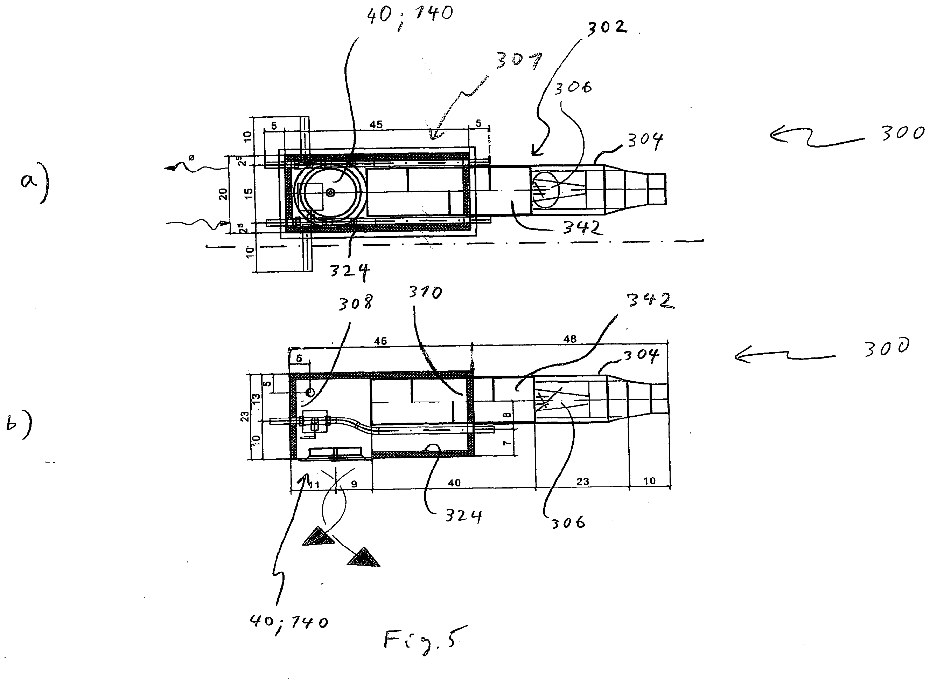

Fig. 5 zeigt eine Ausgestaltung eines sogenannten Deckendralldurchlass-Multifunktionsmoduls 300 für das Einleiten von Zuluft über die Einströmöffnungen 40 und 140 in den beiden oben beschriebenen Ausgestaltungen von Stahlbetondecken in Form von Spannbetondecken oder Stahlbetonflachdecken mit Mittelstützen. Dieses Deckendralldurchlass-Multifunktionsmodul wird bevorzugt ebenfalls in die Decke integriert.

Der Einbau der Deckenluft-Multifunktions-Module in eine Spannbetondecke stellt ebenfalls hohe Anforderungen an die Berücksichtigung des konstuktiven Tragverhaltens der Spannbetondecken: Die Multifunktionsmodule dürfen nur so breit und so hoch sein, dass sie ebenfalls das Tragverhalten der Spannbetonkonstuktionen nicht unzulässig beeinträchtigen.

Daraus, und auch aus Gründen des konstruktiven Brandschutzes und des erforderlichen Abstands der einzelnen Spannglieder/Spannseile einschließlich der jeweiligen Mindestbetonüberdeckung ergibt sich eine maximale Breite und auch eine maximale Höhe des Multifunktionsmoduls, die bei ca 20 - 25 cm liegt.

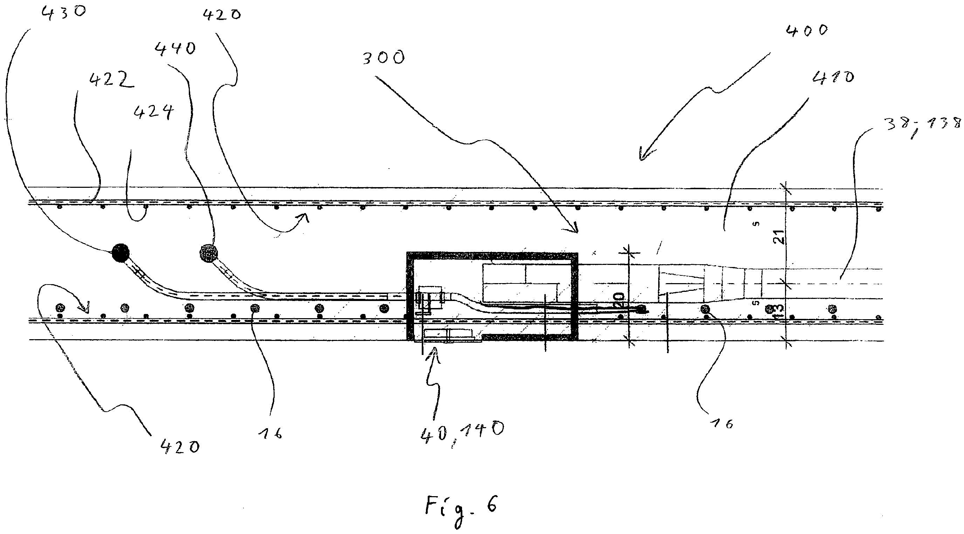

Die prinzipielle Lage sowie die sich daraus ergebende maximale Breite, Dimensionierung und die Anordnung eines solchen Deckenzuluft-Multifunktions-Moduls ist in der Fig. 6 dargestellt.

Ein auf der Basis dieser statisch konstruktiven Randbedingungen entwickeltes Deckenzuluft-Multifunktions-Modul wird hier unter Bezug auf die Figuren 5 und 6 noch näher erläutert. Da sich alle zur thermischen Aktivierung einzelner Deckenelemente vorbeschriebenen Stellglieder (Wasserventile, Zuluftregler) und ein Schalldämpfer in dem für den Einsatz in einer Spannbetondecke entwickelten Modul unterbringen lassen und die aus Gründen des konstruktiven Brandschutzes erforderliche Betonüberdeckung für das Modul auch bei einer TAK-Integral in einer Mehrfelddecke gegeben ist, kann dieser Modul auch dort zum Einsatz kommen.

Die Fig. 5a zeigt das Multifunktionsmodul aus einer Perspektive, die einer Blickrichtung auf das in der Decke eingebaute Modul senkrecht von unten entspricht, also in einer Draufsicht, während die Fig. 5b das Multifunktionsmodul in einer Seitenansicht zeigt, deren Orientierung der Schnittebene durch die Decken und Räume gemäß den Figuren 1 und 3 entspricht.

Das Multifunktionsmodul weist in der dargestellten Ausgestaltung einen ersten Gehäuseabschnitt 301 und einen daraus zu einer Seite abstehenden zweiten Gehäuseabschnitt 302 auf.

Die Gehäuseabschnitte zeichnen sich dadurch aus, dass die lichte Weite des ersten Gehäuseabschnitts größer ist als die lichte Weite des zweiten Gehäuseabschnitts. Dies gilt sowohl in der Seitenansicht als auch in der Draufsicht. Daher ist auch derjenige Querschnitt des ersten Gehäuseabschnitts, der in einer Ebene mit einer in der Zeichnungsebene liegenden Flächennormale liegt, größer als der parallel zu diesem Querschnitt des ersten Gehäuseabschnitts liegende Querschnitt des zweiten Gehäuseabschnitts.

Beide Abschnitte bilden zusammen eine bauliche Einheit und bestehen bevorzugt aus verzinktem Stahlblech mit geschweissten Verbindungen. In einer zum Einbetonieren eingerichteten Ausgestaltung ist der der Übergang zwischen beiden Abschnitten so dicht ausgestaltet, sei es durch Schweißen oder Schrauben oder durch eine andere geeignete Verbindungstechnik, dass flüssiger Beton über diese Verbindung nicht in das Innere des Moduls eindringen kann. Dies erlaubt ein Einbetonierend des Moduls.

Der zweite Gehäuseabschnitt bildet eine Zuluft-Deckenführung 304, mit dem das Multifunktionsmodul 300 bezüglich der Luftzufuhr an einen Zuluftabschnitt 38 oder 138 in der Stahlbetondecke angeschlossen ist, beziehungsweise anschließbar ist.

Zur Verwirklichung dieses Anschlusses verjüngt sich der zweite Gehäuseabschnitt an seinem dem ersten Gehäuseabschnitt abgewandten, dem Lufteintritt dienenden Ende zu einem Anschluss-Nippel, mit dem das Multifunktionsmodul an einen Zuluft führenden Abschnitt 38, 138 angeschlossen wird.

Der Anschluss-Nippel, mit dem das Multifunktionsmodul an den Zuluft führenden Abschnitt 138 abgeschlossen wird, weist bevorzugt einen Durchmesser von 80 mm auf.

Der Anschluss erfolgt zum Beispiel durch Ineinanderstecken, wobei die Durchmesser und die Einstecklänge bevorzugt so gewählt sind, dass sich ein zum Einbetonieren ausreichend dichter Dichtsitz ergibt, was durch O-Ringe oder andere Dichtmittel unterstützt werden kann. Der Durchmesser des Anschlussnippels beträgt bevorzugt 80 mm. Die Befestigung erfolgt zum Beispiel durch Nieten.

Das Multifunktionsmodul 300 zeichnet sich dadurch aus, dass es einen revisionsfähigen Schalldämpfer 342 aufweist.

Dieser ist bevorzugt zum Teil im zweiten Gehäuseabschnitt und zum Teil im ersten Gehäuseabschnitt angeordnet. Dabei wird er bevorzugt im zweiten Gehäuseabschnitt formschlüssig steckend gehalten und ragt aus dieser Halterung heraus in den einen größeren Querschnitt aufweisenden ersten Gehäuseabschnitt hinein.

Der Schalldämpfer 342 weist eine Länge auf, die kleiner ist als eine Revisionsöffnung oder Klappe, die das Multifunktionsmodul in einer bevorzugten Ausgestaltung aufweist, so dass der Schalldämpfer 342 bei in der Decke eingebautem Multifunktionsmodul demontierbar ist.

Ferner weist das Multifunktionsmodul 300 bevorzugt einen Zuluft- Volumenstromregler oder Zuluftregler 306 für die Steuerung der über das Multifunktionsmodul in den Innenraum strömenden Zuluftmenge auf. Der Zuluft-Volumenstromregler 306 ist im Strömungsweg direkt vor dem Schalldämpfer 342 und damit insbesondere zwischen dem Anschlussnippel und dem Schalldämpfer angeordnet. Dabei ist der zweite Gehäuseabschnitt in einer Draufsicht auf eine Oberseite des Multifunktionsmoduls symmetrisch zu einer durch den ersten Gehäuseabschnitt und den zweiten Gehäuseabschnitt verlaufende Mittelachse des Gehäuses angeordnet.

In der Draufsicht ist der Schalldämpfer 342 symmetrisch zum Gehäuse angeordnet, so dass sich für beide in der Draufsicht sichtbaren Abstände der Außenwände des Schalldämpfers zu den gedanklich verlängerten Außenwänden des Multifunktionsmoduls in der zum Strömungsrichtung senkrechten Richtung gleiche Abstände ergeben. So bleibt noch ausreichend Platz für die Führung der Wasserverrohrung und die dazugehörigen Ventile parallel zu der Zuluftführung, ohne dass die Wasserverrohrung seitlich über das Gehäuse des Multifunktionsmoduls übersteht.

In der Seitenansicht ist der Schalldämpfer außermittig so angeordnet, dass er bei in der Decke eingebautem Multifunktionsmodul aus der Mitte heraus nach oben versetzt angeordnet ist.

Dies verbessert die Schalldämpfung zum Innenraum hin, der durch das Multifunktionsmodul mit Frischluft versorgt wird. Ein weiterer Vorteil der nach oben versetzten Einbaulage besteht darin, dass zwischen der Unterseite des hülsenförmigen Gehäuseabschnitts und der Unterseite der Decke noch ausreichend Platz für die Stahlarmierung, zum Beispiel für Spannseile oder Stahlmatten, sowie für die Kühl/-Heiz-Wasserverrohrung 38 bleibt.

Dadurch wird die Fläche, auf der die Kühl/Heiz-Verrohrung und die Stahlarmierung durch das Multifunktionsmodul verdrängt wird, auf die Fläche des ersten Gehäuseabschnitts beschränkt. Damit wird gleichzeitig ein möglicher nachteiliger Einfluss auf das Tragverhalten der Stahlbetondecke minimiert. Die Unterseite des Quaderförmigen Gehäuseabschnitts schließt bevorzugt bündig mit der Deckenunterseite ab.

Von Vorteil ist es auch, wenn der der erste Gehäuseabschnitt an seiner im eingebauten Zustand bevorzugt mit der Deckenfläche bündig liegenden Unterseite zu Revisionszwecken geöffnet werden kann, sei es durch einen ausschwenkbaren Boden oder eine abnehmbare Bodenplatte. Um die volle Revisionsfähigkeit zu erzielen, reicht es aus wenn die sich ergebende Revisionsöffnung groß genug ist, um die größte zusammenhängende Komponente entnehmen zu können.

Es ist daher bevorzugt, dass der erste Gehäuseabschnitt an seiner Unterseite eine Revisionsöffnung aufweist, die so groß ist, dass sie eine Montage und eine Demontage der größten zusammenhängenden und innerhalb des Gehäuses angeordneten Komponente erlaubt.

Die größte Komponente ist in der Regel der Schalldämpfer. Durch die bezüglich ihrer Einbauhöhe außermittige Anordnung des Hülsen-förmigen Gehäuseabschnitts wird die Fläche, auf der die Kühl/Heiz-Verrohrung und die Stahlarmierung durch das Multifunktionsmodul verdrängt wird, auf die zur Revision der größten auswechselbaren Komponente erforderliche Größe des Moduls beschränkt. Damit wird gleichzeitig ein möglicher nachteiliger Einfluss auf das Tragverhalten der Stahlbetondecke und das Erscheinungsbild der Decke minimiert.

Der Schalldämpfer weist also bevorzugt Abmessungen auf, die kleiner sind als die Abmessungen einer Revisionsöffnung oder Klappe des Multifunktionsmoduls, so dass er bei in der Decke eingebautem Multifunktionsmodul demontierbar ist. Dies gilt analog für den Zuluft- Volumenstromregler. Bei ausgebautem Schalldämpfer können darüber hinaus die einzelnen Zuluftrohre bei Bedarf jederzeit bezüglich einer evtl. Verschmutzung kontrolliert und gereinigt werden.

Der Schalldämpfer weist in einer bevorzugten Ausgestaltung einen Durchmesser von 130 mm bei einer Länge von 400 mm auf. Seine Einfügungsdämpfung beträgt bevorzugt 2 db bei 63 Hz, 4 db bei 125 Hz, 5 db bei 250 Hz, 9 db bei 500 Hz, 20 db bei 1000 Hz, 16 db bei 2000 Hz, 15 db bei 4000 Hz und 10 db bei 8000 Hz, ohne dass die Erfindung auf Schalldämpfer mit solchen Dämpfungswerten beschränkt ist. Durch diese Dämpfungswerte wird eine praktisch geräuschlose Belüftung des von dem Multifunktionsmodul mit Frischluft versorgten Innenraum ermöglicht.

Eine zur Regelung der Luftzufuhr dienende Absperrklappe des Zuluftreglers hat bevorzugt einen Durchmesser von 100 mm bei einer Absperrklappenmodullänge von 230 mm. Das Modul weist bevorzugt einen innenliegenden elektrischen Antrieb zum Verstellen der Absperrklappe auf.

In einer bevorzugten Ausgestaltung weist der erste Gehäuseabschnitt in der Draufsicht eine Breite von weniger als 30 cm, bevorzugt eine Breite von 20 cm auf. Natürlich können diese Abmessungen auch größer sein. Es ist jedoch mit Blick auf möglich Einflüsse auf das Tragverhalten und den ästhetischen Eindruck der Decke eher anzustreben, dass diese Abmessungen möglichst gering sind.

Auf der dem Schalldämpfer und Lufteintritt gegenüberliegenden Seite 308 des Multifunktionsmoduls sind in dem Gehäuse des Multifunktionsmoduls noch die erforderlichen Ventile der in der Stahlbetonflachdecke/Spannbetondecke liegenden Wasserverrohrungen für den Zulauf/Rücklauf der Heizung(im Winter) bzw. der Kühlung (im Sommer) für die thermische Aktivierung der Stahlbetondecken installiert.

Dabei handelt es sich um wenigstens ein steuerbares Ventil, das zur Steuerung des Wasserdurchflusses durch die wasserführende Verrohrung eingerichtet und angeordnet ist. Bevorzugt ist aber, dass auf der Seite 310 des Multifunktionsmoduls, die dem Zuluftanschluss zugewandt ist, Anschlüsse 312, 314 für die Wasserverrohrung für den Vorlauf und den Rücklauf angeordnet sind, dass auf der dem Zuluftanschluss abgewandten Seite 308 Anschlüsse für die Wasserverrohrung für den Vorlauf und den Rücklauf angeordnet sind, und dass die Vorlaufanschlüsse 312, 316 durch eine innerhalb des Multifunktionsmoduls verlaufende Vorlaufleitung miteinander verbunden sind und dass die Rücklaufanschlüsse 316, 318 durch eine innerhalb des Multifunktionsmoduls verlaufende Rücklaufleitung miteinander verbunden sind.

Die auf der einen Seite des Multifunktionsmoduls liegenden Anschlüsse sind durch ihre Geometrie und Struktur (lichte Weite, Randstärke, Material) dazu eingerichtet, an die stahlbetondeckenseitige Wasserverrohrung 16 angeschlossen zu werden. Die stahlbetonseitige Wasserverrohrung ist diejenige Wasserverrohrung, die in einem bestimmten Segment der Decke liegt, das auch der Luftausströmöffnung zugeordnet ist, und die dieses Segment individuell heizt oder kühlt.

Diese eine Seite kann entweder die dem Zuluftanschluss zugewandte Seite 310 des Multifunktionsmoduls oder aber die dem Zuluftanschluss abgewandte Seite 308 des Multifunktionsmoduls sein.

Die auf der jeweils anderen Seite des Multifunktionsmoduls liegenden Anschlüsse sind durch ihre Geometrie und Struktur (lichte Weite, Randstärke, Material) dazu eingerichtet, an die verteilungsseitige Wasserverrohrung angeschlossen zu werden. Die verteilungsseitige Wasserverrohrung ist diejenige Wasserverrohrung, die den Zulauf und den Rücklauf für mehrere Segmente der Decke bildet.

Dabei ist bevorzugt, dass sowohl die Vorlaufleitung als auch die Rücklaufleitung ein innerhalb des Multifunktionsmoduls angeordnetes elektrisch steuerbares Durchflussregelventil 320, 322 aufweist.

In der dargestellten Ausgestaltung sind auf der Seite 310 des Multifunktionsmoduls, die dem Zuluftanschluss zugewandt ist, Anschlüsse 312, 314 für die Stahlbetondeckenseitige Wasserverrohrung für den Vorlauf und den Rücklauf angeordnet, während auf der dem Zuluftanschluss abgewandten Seite 308 Anschlüsse für die Verteilungsseitige Wasserverrohrung für den Vorlauf und den Rücklauf angeordnet sind. In jedem Fall sind die Vorlaufanschlüsse 312, 316 durch eine innerhalb des Multifunktionsmoduls verlaufende Vorlaufleitung miteinander verbunden, und die Rücklaufanschlüsse 316, 318 sind ebenfalls durch eine innerhalb des Multifunktionsmoduls verlaufende Rücklaufleitung miteinander verbunden.

Sowohl die Vorlaufleitung als auch die Rücklaufleitung weist ein innerhalb des Multifunktionsmoduls angeordnetes elektrisch steuerbares Durchflussregelventil 320, 322 auf. Das jeweilige Ventil ist bevorzugt für einen Nenn-Durchsatz von 150 l pro Stunde ausgelegt.

Mit diesem Deckendralldurchlass-Multifunktionsmodul sind alle Systemkomponenten jederzeit und über einen bevorzugt sogar ausklappbaren Bodenträger des Multifunktionsmoduls mit entsprechenden Randabdichtungen gegen unkontrollierte Zuluftaustritte aus dem unteren Gehäuserand des Multifunktionsmoduls auf einfachem Wege revisionsfähig in die die Stahlbetondecke integriert.

Die Innenseite des Gehäuses des Multifunktionsmoduls ist bevorzugt mit einer Schicht 324 aus schallabsorbierendem Material ausgekleidet. Dies bewirkt eine Dämpfung von beim Betrieb des Multifunktionsmoduls auftretenden Geräuschen, seien es Geräusche der Stellglieder (Zuluftregler, Wasserventile) oder Strömungsgeräusche der im Hohlraum des Multifunktionsmoduls strömenden Medien, also der Frischluft und des Wassers in der durch den Hohlraum führenden Verrohrung.

Bevorzugt ist auch, dass ein Luftauslass des Multifunktionsmoduls eine runde Ausströmöffnung aufweist, in der Luftleitstrukturen angeordnet sind, die der ausströmenden Luft einen vorbestimmten Drall verleihen. Der Luftauslass des Multifunktionsmoduls ist bevorzugt für einen Luftdurchsatz von 45 bis 90 Kubikmeter Luft pro Stunde ausgelegt. Die runde, insbesondere kreisrunde Ausströmöffnung weist bevorzugt eine lichte Weite von 180 mm auf. In dieser Ausströmöffnung sind bevorzugt Luftleitstrukturen angeordnet, die der ausströmenden Luft einen vorbestimmten Drall verleihen. Dadurch wird eine zugfreie und geräuschlose Einströmung der Frischluft erzeugt, wobei der Drall eine Vermischung der Frischluft mit der Raumluft verbessert. Es versteht sich aber, dass die Ausströmöffnung auch eine andere Form aufweisen kann, zum Beispiel eine eckige Form.

So wie für die Ausgestaltung mit der Spannbetondecke gilt auch für die Ausgestaltung mit der Stahlbetonflachdecke mit Mittelstützen 200 das Folgende:
Bevorzugt ist auch, dass jeder Zuluft führende Abschnitt 38, 138, an den jeweils ein Multifunktionsmodul angeschlossen ist, mit dem Hauptzuluftkanal 136 verbunden ist. Jeder Zuluftregler ist bevorzugt unabhängig von gegebenenfalls vorhandenen weiteren Zuluftreglern anderer Multifunktionsmodule unabhängig individuell und fernsteuerbar einstellbar ist.

Jeder Zuluftregler ist zusammen mit einem Schalldämpfer als Bestandteil des Multifunktionsmoduls in einem Hohlraum innerhalb der Betondecke angeordnet.

In einer bevorzugten Ausgestaltung wird der Hohlraum dadurch erzeugt, dass sämtliche Komponenten des Multifunktionsmoduls an ihre Decken-seitigen Leitungen, seien es Luftleitungen, Wasserleitungen oder der Versorgung mit elektrischer Energie und/oder der Steuerung dienende elektrische Leitungen angeschlossen werden oder dass ihrem Anschluss dienende Enden der Decken-seitigen Leitungen zumindest in ein Gehäuse des Multifunktionsmoduls eingebracht werden, bevor die Decke betoniert wird. Das Gehäuse des Multifunktionsmoduls wird auf diese Weise zur Form, die den Hohlraum definiert, in dem dann sämtliche Komponenten des Multifunktionsmoduls angeordnet und untergebracht sind. Alternativ dazu ist es aber auch möglich, den Hohlraum mit einer Platzhalter-Positiv-Form des Moduls beim Betonieren zu erzeugen, wobei das Positiv zum Beispiel aus Styropor bestehen kann. Nach dem Aushärten des Betons kann das Positiv dann aus der Decke herausgelöst werden, um anschließend das Multifunktionsmodul einzubauen. Bevorzugt wird das Multifunktionsmodul jedoch an alle zu seinem Betrieb notwendigen Leitungen angeschlossen und im angeschlossenen Zustand einbetoniert.

Fig. 6 zeigt einen vertikalen Querschnitt durch eine Stahlbetondecke 400 und ein in die Decke eingebautes oder einbetoniertes Multifunktionsmodul 300. Die Decke ist entweder eine Spannbetondecke, wie sie als Ausführungsbeispiel unter Bezug auf die Figuren 1 und 2 erläutert wurde, oder sie ist eine Einfeld- oder Mehrfeld-Stahlbetondecke, wie sie als Ausführungsbeispiel unter Bezug auf die Figuren 3 und 4 beschrieben wurde. Die Stahlbetondecke weist eine massive Betonschicht 410 auf, die mit einer Stahlarmierung versehen ist. Die Stahlarmierung weist in der dargestellten Ausgestaltung sowohl sich in der Zeichnungsebene erstreckende Anteile 422 als auch sich quer zur Zeichnungsebene erstreckende Anteile 424 auf. Bei einer Spannbetondecke sind die Armierungen zumindest zum Teil als gespannte, beziehungsweise beim Herstellen der Decke zu spannende Zugseile realisiert. Bei einer Einfeld- oder Mehrfelddecke sind die Stahlarmierungen zum Beispiel als gitterförmige Matten verwirklicht.

Die Decke weist einbetonierte, zur Führung von Wasser eingerichtete Kühl/Heizrohre 16 als Stahlbetondeckenseitige Verrohrung und einen ebenfalls einbetonierten Zulauf 430 und einen einbetonierten Rücklauf 440 als verteilungsseitige Verrohrung auf. Die Kühl/Heizrohre bilden ein hydraulisch untereinander verbundenes Leitungssystem, das ein an einen Zulaufanschluss des Multifunktionsmoduls anzuschließendes Ende und ein an einen Rücklaufanschluss des Multifunktionsmoduls anzuschließendes Ende aufweist. Der Zulaufanschluss und der Rücklaufanschluss ragen bei dem dargestellten Ausführungsbeispiel auf der dem Zuluftanschluss zugewandten Seite aus dem Multifunktionsmodul heraus, so dass sie außerhalb des Multifunktionsmoduls vor dem Betonieren der Decke angeschlossen werden können.

Der Hohlraum ist in der Stahlbetondecke am innenraumseitigen Ende eines jeweils zuluftführenden Abschnitts 38, 138 angeordnet, dessen anderes Ende an den ebenfalls in der Decke integrierten Hauptzuluftkanal angeschlossen ist. Insofern stellt der Hohlraum eine einen Luftstrom erlaubende Verbindung eines zuluftführenden Abschnitts zum Innenraum dar.

Für das Multifunktionsmodul gilt, dass dieses, wie alle in den Beton eingebundenen Teile, die gleiche Lebenszeit aufweisen müssen wie der sie umgebende Beton. Daraus ergibt sich die Anforderung, dass das Multifunktionsmodul mindestens 50 Jahre funktionsfähig bleiben muss. Die VDI 6022 verlangt - und das wird immer wichtiger - dass das Zuluftleitungssystem gereinigt werden kann. Dies wird durch die vorliegende Konstruktion des Multifunktionsmoduls möglich, da eine motorisch betriebene Bürste bei ausgebautem Schalldämpfer und Zuluftregler durch den Auslass leicht in den Zuluftkanal einzuführen ist. Die Wartung von Antrieben, der Regelungstechnik etc. ist hier sehr einfach möglich, da die raumseitige Abdeckung und die nur gesteckten Schalldämpfer, Volumenstromregler etc. einfach entnommen werden können. Vorteilhaft ist auch, dass die Schalldämpfer direkt vor dem Luftdurchlass angeordnet sind. Sie dämpfen damit nicht nur ein Strömungsrauschen des Zuluftreglers und der Lüftungskanäle, sondern auch den Telefonieschall zwischen den Büroräumen durch den zweifachen Schalldurchgang.

Im Betrieb werden alle hier vorgestellten Decken in einem sogenannten Niedrigtemperaturbetrieb gefahren. Dies bedeutet, dass sich die Vorlauftemperaturen des Heiz-/Kühlwassers im Winter auf max 28-30 °C und im Sommer auf 18-16° C belaufen.

Daraus resultiert ein vorteilhaft niedriger Energiebedarf, der es erlaubt, diese Decken ausschliesslich mit Umwelt freundlichen und regenerativen Energien wie beispielsweise Erdwärme zu betreiben.

Dadurch, dass mit der Wasserverrohrung die massive Stahlbetondecke, die einen Wärmespeicher mit erheblicher Kapazität bildet, im Winter erwärmt und im Sommer gekühlt wird, kann die jeweilige Speicherfähigkeit der Stahlbetondecke dazu genutzt werden, die Zuluft für die kontrollierte Lüftung der Räume auf die Raumtemperaturen im Winter nachzuwärmen bzw. im Sommer nachzukühlen. Da die Zuluft als Abluft einem Wärmetauscher zugeführt wird, tritt die Abluft unter Beimischung von 100 % Frischluft sowohl im Winter- als auch im Sommerbetrieb aus dem Wärmetauscher bereits mit einer so hohen Temperatur im Winter und einer so niedrigen Temperatur im Sommer aus dem Wärmetauscher heraus, dass sie ausschließlich mit der Nacherwärmung im Winter bzw. mit der Nachkühlung im Sommer die jeweils erforderliche Raumtemperatur erreicht. Dadurch zeichnen sich die hier vorgestellten Decken durch sehr niedrige Energieverbrauchswerte bei gleichzeitig sehr hohem Nutzerkomfort aus. Die Zuluft kann über die in der Stahlbetondecke integrierten Zuluftleitungen an jeder beliebigen Stelle in einem Raum zugeführt werden. Darüber hinaus wird die Anzahl und die Lage/Dimensionierung der Zuluftleitungs-Querschnitte, und der Deckendralldurchlässe so gewählt,dass die Austrittsgeschwindigkeit der Zuluft sehr gering ist, was für eine im Raum absolut zugfreie Lüftung sorgt. Mit den hier vorgestellten Decken Systemen können auch Räume mit grossen Raumtiefen an jeder Stelle zugluftfrei mit 100% Frischluft versorgt werden.

Damit erfüllen diese Decken alle Behaglichkeitskriterien der einschlägigen ISO 7730 und DIN-Normen.

Die hier vorgestellten Decken können auf Nutzerwunsch auch mit einer Be- und Entfeuchtung der Zuluft betrieben werden.

Die Unterschiedlichen Anordnungen, die Anzahl und die Lage der verschiedenen in den Decken integrierten Zulufthaupleitungen ergibt sich jeweils aus den unterschiedlichen konstruktiven Anforderungen und Randbedingungen bei den unterschiedlichen Stahlbeton-Deckenausführungen. Das heißt, dass sich die Anzahl, Lage und auch die unterschiedlichen Formen der Hauptzuluftleitungen aus der Statik/Tragwerksplanung ergibt. So werden z.B Rundrohre bei den Stahlbeton-Mehrfelddecken und Ovalrohre bei den Spannbetondecken bevorzugt.

Je nach Deckenform kann die Lage und Anordnung/Anzahl von den Hauptzuluftleitungen unterschiedlich sein. Unterschiede ergeben sich zum Beispiel dann, wenn die sogenannten Nutzungseinheiten entweder nur von einer Festpunktseite (z.B. einem Treppenhaus) oder aber von zwei Festpunktseiten angefahren werden. Darüber hinaus gäbe es noch weitere prinzipielle Anordnungen von den in den Stahlbetondecken integrierten Hauptzuluftleitungen, wie z. B. bei einem Dreibund oder aber einem Gebäude mit einem zentralen Festpunkt, wo die Hauptzuluftleitungen sternförmig in die Büroflächen geführt werden.

Die hier beschriebenen Deckenkonstruktionen können nicht nur für Zwischendecken verwendet werden, sondern sie können auch als Bestandteile von Dachkonstruktionen verwendet werden. Insofern ist die Erfindung auch nicht auf ebene Ausgestaltungen beschränkt sondern kann auch bei gewölbten Flächen verwendet werden, also inbesondere bei einem Kuppeldach oder einem Schalendach. Die Erfindung ist also insbesondere nicht auf Geschossdecken beschränkt, sondern sie kann auch in einer ein Gebäude überdachenden Abschlussdecke verwirklicht werden, unabhängig davon, ob diese eine ebene, eine schalenförmige oder eine kuppelförmige Abschlussdecke ist.

## Patentansprüche

1. Gebäude (10) mit wenigstens einer Stahlbetondecke (12; 112), das zur Beheizung und zur Kühlung des von der Stahlbetondecke überdeckten Innenraums (14; 114) ein in die Stahlbetondecke integriertes wasserbasiertes Kühl/Heizsystem als Kreislaufsystem und ein zur Frischluftzufuhr in den Innenraum dienendes luftführendes Rohrsystem mit einem zuluftführenden Teil aufweist, wobei das Rohrsystem wenigstens einen in die Stahlbetondecke integrierten Hauptzuluftkanal (36; 136) und von dem Hauptzuluftkanal abzweigende und zu einzelnen Teilbereichen des Innenraums führende Abschnitte (38; 138) aufweisen, wobei wenigstens ein einem jeweiligen Teilbereich des Innenraums zugeordneter Abschnitt des zuluftführenden Teils des Rohrsystems in die Stahlbetondecke des Innenraums integriert ist und über eine Einströmöffnung (40; 140) in den Innenraum mündet, so dass sich die Temperatur der vortemperierten Frischluft beim Durchströmen des Abschnitts der Temperatur der wassertemperierten Stahlbetondecke angleicht, **dadurch gekennzeichnet, dass** wenigstens einer der Abschnitte (38; 138) über einen Schalldämpfer (342) und einen Volumenstromregler (306) mit dem Hauptzuluftkanal verbunden ist, wobei sowohl der Schalldämpfer als auch der Volumenstromregler ebenfalls in die Stahlbetondecke integriert sind, wobei sowohl der Volumenstromregler (306) als auch der Schalldämpfer (342) in einem Hohlraum innerhalb der Stahlbetondecke angeordnet sind, der vom Innenraum her über eine abdeckbare Revisionsöffnung zugänglich ist, und wobei der Volumenstromregler (306) unabhängig von gegebenenfalls vorhandenen weiteren Volumenstromreglern anderer Abschnitte individuell und fernsteuerbar einstellbar ist.

2. Gebäude (10) nach Anspruch 1, **dadurch gekennzeichnet, dass** die Stahlbetondecke eine den Innenraum (14) ohne innere Stützen überspannende Spannbetondecke (12) ist.

3. Gebäude (10) nach Anspruch 1 oder 2, **dadurch gekennzeichnet, dass** die zuluftführenden Abschnitte (38; 138) in die Stahlbetondecke (12; 112) einbetoniert sind.

4. Gebäude (10) nach einem der vorhergehenden Ansprüche, **dadurch gekennzeichnet, dass** der Hauptabluftkanal (34) zwischen der Stahlbetondecke und der Außenfassade des Gebäude angeordnet ist.

5. Gebäude (10) nach einem der vorhergehenden Ansprüche, **dadurch gekennzeichnet, dass** der zuluftführende Teil und der abluftführende Teil über eine Wärmetauschereinrichtung miteinander gekoppelt sind, so dass die von aussen zugeführte Frischluft durch die nach außen abgeführte Abluft vortemperiert wird.

6. Gebäude (10) nach einem der vorhergehenden Ansprüche, **dadurch gekennzeichnet, dass** die Stahlbetondecke eine den Innenraum überdeckende Stahlbetondecke (112) ist.

7. Gebäude (10) nach Anspruch 6, **gekennzeichnet durch** eine oder mehrere Mittelstützen (200), die Gewicht der Stahlbetondecke aufnehmen.

8. Gebäude (10) nach einem der vorhergehenden Ansprüche, **dadurch gekennzeichnet, dass** die Stahlbetondecke eine zwei Geschosse eines Gebäudes trennende Zwischendecke ist.

9. Gebäude (10) nach einem der vorhergehenden Ansprüche, **dadurch gekennzeichnet, dass** die Stahlbetondecke ein Bestandteil einer Dachkonstruktion eines Gebäudes ist.

10. Gebäude (10) nach einem der vorhergehenden Ansprüche, **dadurch gekennzeichnet, dass** die Decke eine ebene Decke ist.

11. Gebäude (10) nach Anspruch 9, **dadurch gekennzeichnet, dass** die Decke als Teil eines gewölbten, Stützen aufweisenden Schalendachs oder freitragenden Kuppeldachs in gewölbter Form verwirklicht ist.

12. Gebäude (10) nach einem der vorhergehenden Ansprüche, **gekennzeichnet durch** wenigstens ein Multifunktionsmodul mit einem Schalldämpfer, einem Zuluft-Volumenstromregler, einem Deckendrallauslass, einer Vorlaufleitung mit einem elektrischen steuerbaren Ventil und einer Rücklaufleitung mit einem elektrisch steuerbaren Ventil.

## Claims

1. Building (10) with at least one reinforced concrete floor (12; 112) comprising a water-based cooling/heating system integrated in the reinforced concrete floor as a circuit system for heating and for cooling the interior space covered by the reinforced concrete floor (14; 114) and an air ducting pipe system with a supply air ducting part for the purpose of supplying fresh air to the interior space, wherein the pipe system has at least one main supply air duct (36; 136) integrated in the reinforced concrete floor and sections (38; 138) branching off from the main supply air duct and leading to individual subsections of the interior space, wherein at least one section of the supply air ducting part of the pipe system dedicated to a respective subsection of the interior space is integrated in the reinforced concrete floor of the interior space and opens into the interior space through an inflow port (40; 140) so that the temperature of the temperature-conditioned fresh air as it flows through the section adjusts to the temperature of the reinforced concrete floor which is temperature-conditioned by water, **characterized in that** at least one of the sections (38; 138) is connected to the main supply air duct by means of a sound absorber (342) and a volume flow controller (306), wherein both the sound absorber as well as the volume flow controller are also integrated in the reinforced concrete floor, wherein both the volume flow controller (306) as well as the sound absorber (342) are arranged in a hollow space inside the reinforced concrete floor which is accessible from the interior space via a concealable inspection opening, and wherein the volume flow controller (306) can be adjusted individually and by remote control independent of any other volume flow controllers present in other sections.

2. Building (10) according to Claim 1, **characterized in that** the reinforced concrete floor is a prestressed concrete floor (12) spanning the interior space (14) without internal supports.

3. Building (10) according to Claim 1 or 2, **characterized in that** the supply air ducting sections (38; 138) are set in concrete in the reinforced concrete floor (12; 112).

4. Building (10) according to one of the preceding claims, **characterized in that** the main exhaust air duct (34) is arranged between the reinforced concrete floor and the building's external facade.

5. Building (10) according to one of the preceding claims, **characterized in that** the supply air ducting part and the exhaust air ducting part are linked to each other by means of a heat exchange device so that fresh air supplied from the outside is temperature-conditioned by the exhaust air vented outdoors.

6. Building (10) according to one of the preceding claims, **characterized in that** the reinforced concrete floor is a reinforced concrete floor (112) spanning the interior space.

7. Building (10) according to Claim 6, **characterized by** one or several center supports (200) bearing the weight of the reinforced concrete floor.

8. Building (10) according to one of the preceding claims, **characterized in that** the reinforced concrete floor is an intermediate floor separating two storeys of a building.

9. Building (10) according to one of the preceding claims, **characterized in that** the reinforced concrete floor is a component of a building's roof construction.

10. Building (10) according to one of the preceding claims, **characterized in that** the floor is a flat floor.

11. Building (10) according to claim 9, **characterized in that** the floor has been realized as part of a vaulted shell roof having supports or a self-supporting domed roof.

12. Building (10) according to one of the preceding claims, **characterized by** at least one multi-functional module comprising a sound absorber, a supply air volume flow controller, a ceiling swirl diffuser, a flow pipe with an electrically controlled valve and a return pipe with an electrically controlled valve.

## Revendications

1. Bâtiment (10) qui comprend au moins un plafond en béton armé (12; 112) et qui présente, pour le chauffage et le refroidissement de l'espace intérieur (14; 114) couvert par le plafond en béton armé, un système de refroidissement/chauffage à eau intégré dans le plafond en béton armé faisant office de système de circulation et un système de tuyauterie acheminant l'air entrant, servant à amener de l'air frais dans l'espace intérieur et pourvu d'une partie acheminant l'air entrant, dans lequel le système de tuyauterie présente au moins un conduit d'air entrant principal (36; 136) intégré dans le plafond en béton armé et des sections (38; 138) bifurquant du conduit d'air entrant principal et menant à différentes zones partielles de l'espace intérieur, dans lequel au moins une section de la partie acheminant l'air entrant du système de tuyauterie, laquelle section est affectée à une zone partielle respective de l'espace intérieur, est intégrée dans le plafond en béton armé de l'espace intérieur et débouche dans l'espace intérieur par un orifice d'admission (40; 140), de sorte que la température de l'air frais préalablement thermorégulé, lorsque celui-ci traverse la section, s'adapte à la température du plafond en béton armé thermorégulé par l'eau, **caractérisé en ce qu'**au moins une des sections (38; 138) est reliée au conduit d'air entrant principal par l'intermédiaire d'un silencieux (342) et d'un régulateur de débit volumique (306), dans lequel aussi bien le silencieux que le régulateur de débit volumique sont eux aussi intégrés dans le plafond en béton armé, dans lequel aussi bien le régulateur de débit volumique (306) que le silencieux (342) sont agencés dans une cavité à l'intérieur du plafond en béton armé, qui est accessible de l'espace intérieur en passant par une ouverture de contrôle pouvant être recouverte, et dans lequel le régulateur de débit volumique (306) peut être réglé de manière individuelle et commandable à distance indépendamment d'autres régulateurs de débit volumique, présents le cas échéant, d'autres sections.

2. Bâtiment (10) selon la revendication 1, **caractérisé en ce que** le plafond en béton armé est un plafond en béton précontraint (12) recouvrant l'espace intérieur (14) sans appuis intérieurs.

3. Bâtiment (10) selon la revendication 1 ou 2, **caractérisé en ce que** les sections (38; 138) acheminant l'air entrant sont enrobées dans du béton dans le plafond en béton armé (12; 112).

4. Bâtiment (10) selon l'une quelconque des revendications précédentes, **caractérisé en ce que** le conduit d'air vicié principal (34) est agencé entre le plafond en béton armé et la façade extérieure du bâtiment.

5. Bâtiment (10) selon l'une quelconque des revendications précédentes, **caractérisé en ce que** la partie acheminant l'air entrant et la partie acheminant l'air vicié sont accouplées l'une à l'autre par l'intermédiaire d'un dispositif échangeur de chaleur, de sorte que l'air frais amené de l'extérieur est préalablement thermorégulé par l'air vicié évacué vers l'extérieur.

6. Bâtiment (10) selon l'une quelconque des revendications précédentes, **caractérisé en ce que** le plafond en béton armé est un plafond en béton armé (112) couvrant l'espace intérieur.

7. Bâtiment (10) selon la revendication 6, **caractérisé par** un ou plusieurs appuis centraux (200), qui absorbent le poids du plafond en béton armé.

8. Bâtiment (10) selon l'une quelconque des revendications précédentes, **caractérisé en ce que** le plafond en béton armé est un faux-plafond séparant deux étages d'un bâtiment.

9. Bâtiment (10) selon l'une quelconque des revendications précédentes, **caractérisé en ce que** le plafond en béton armé fait partie d'une structure de toit d'un bâtiment.

10. Bâtiment (10) selon l'une quelconque des revendications précédentes, **caractérisé en ce que** le plafond est un plafond plat.

11. Bâtiment (10) selon la revendication 9, **caractérisé en ce que** le plafond est réalisé en tant que partie d'un toit en coque bombé présentant des appuis ou d'un toit à coupole en porte-à-faux de forme bombée.

12. Bâtiment (10) selon l'une quelconque des revendications précédentes, **caractérisé par** au moins un module multifonctionnel pourvu d'un silencieux, d'un régulateur de débit volumique d'air entrant, d'un diffuseur plafonnier à jet hélicoïdal, d'une conduite de départ pourvue d'une soupape à commande électrique et d'une conduite de retour pourvue d'une soupape à commande électrique.
